# EUROPÄISCHE PATENTSCHRIFT

(11) **EP 1 728 959 B1**
(45) Veröffentlichungstag und Bekanntmachung des Hinweises auf die Patenterteilung: **29.04.2009**
(21) Anmeldenummer: 06010241.5
(22) Anmeldetag: 18.05.2006
(51) Int. Cl.: E05F 15/20, E05F 15/00

(54) **Verfahren zur Ermittlung einer in Querrichtung geneigten Stellung eines Fahrzeugs während des Schliessvorganges der Fahrzeugtüren**
Method for determining the inclined position of the vehicle during the closing of a door
Procédé de détection de la position inclinée d'un véhicule pendant la fermerture d'une porte

(30) Priorität: 03.06.2005 DE 102005025504
(43) Veröffentlichungstag der Anmeldung: 06.12.2006
(73) Patentinhaber: Gebr. Bode GmbH & Co. KG, 34123 Kassel (DE)
(72) Erfinder: Hamberger, Harry, 34266 Niesetal (DE); Meyerrose, Klaus, 34266 Niesetal (DE)
(74) Vertreter: Bauer Vorberg Kayser Patentanwälte

(56) Entgegenhaltungen:
- DE-A1- 10 045 341
- DE-A1- 19 819 704
- US-A- 6 134 836

## Beschreibung

Gegenstand der Erfindung ist ein Verfahren zur Ermittlung einer in Querrichtung geneigten Stellung eines Fahrzeugs während des Schließvorganges der Fahrzeugtüren mit dem Merkmalen aus dem Oberbergriff des Patentanspruchs 1.

Bei Fahrzeugen, insbesondere bei Fahrzeugen des Personenverkehrs, werden häufig automatische Schwenkschiebetüren verwendet. Die Schließbewegung dieser Schwenkschiebetüren gliedert sich im Wesentlichen in zwei Abschnitte, nämlich einen ersten Parallel-Abschnitt, in welchem die Schwenkschiebetüren eine Bewegung im Wesentlichen parallel zum Fahrzeug durchführen, und einen zweiten Einschwenk-Abschnitt, in welchem die Schwenkschiebetüren, zusätzlich zu der parallelen Bewegung, in Richtung zum Fahrzeug einschwenken.

Bei einer automatischen Schwenkschiebetür ist stets von großer Bedeutung, dass Hindernisse oder Einklemmungen von Personen oder Gegenständen detektiert werden, damit die Bewegung der Schwenkschiebetür gestoppt oder reversiert wird. Dazu können u.a. Lichtschranken oder in Tür- oder Rahmendichtungen angeordnete Schaltleisten verwendet werden.

Eine weitere Möglichkeit der Einklemmerkennung wird in der Patentschrift DE 31 11 711 C2 beschrieben. Hier wird eine Einklemmsicherungseinrichtung offenbart, bei der ein elektrischer Signalgeber, der mit der Tür oder dem Türantrieb gekoppelt ist, beim Erreichen vorgegebener Positionen der Tür jeweils ein Positionssignal abgibt und diese Positionssignale einer elektrischen Messeinrichtung zugeführt werden, in welcher die Zeitintervalle zwischen den aufeinanderfolgenden Signalen gemessen und mit vorgegebenen Zeitintervallen verglichen werden, wobei ein Steuersignal ein Abstoppen oder Reversieren der Türbewegung bewirkt, wenn das gemessene Zeitintervall größer als das vorgegebene Zeitintervall ist und wobei als vorgegebenes Zeitintervall das Zeitintervall dient, das jeweils bei dem vorhergehenden Türschließvorgang bzw. ―öffnungsvorgang zwischen gleichen Positionen gemessen wurde.

Die Patentschrift US 6 134 386 offenbart eine andere Möglichkeit zur Ermittlung der Neigung des Fahrzeuges.

Ferner kann zur Einklemmerkennung auch der Motorstrom des Türantriebs überwacht werden, weil der Motorstrom im Allgemeinen bei einer Behinderung des Schließvorganges ansteigt. Probleme ergeben sich allerdings, wenn die Umgebungsbedingungen beispielsweise durch Temperaturunterschiede oder Verschmutzungen nicht konstant sind, da auch in diesen Fällen der Motorstrom variiert, ohne dass eine Einklemmung vorliegt. Der Schließvorgang kann beispielsweise bei besonders niedrigen Temperaturen erschwert sein, woraus ein erhöhter Motorstrom resultiert. Damit in einem solchen Fall die Türbewegung nicht gestoppt oder reversiert wird, können selbstlernende Lernverfahren eingesetzt werden. Ziel dieser Lernverfahren ist im Wesentlichen, die Schwelle für den Motorstrom zu finden, bei der eine Einklemmung vorliegt. Diese Schwelle wird durch das selbstlernende Verfahren ständig an wechselnde Umgebungen angepasst. Dieses Verfahren liefert gute Ergebnisse, wenn sich die Umgebung nicht zu schnell ändert, wie es bei Temperaturen oder bei Verschmutzung der Fall ist.

Problematisch ist allerdings, wenn das Schienenfahrzug in Querrichtung geneigt ist. Dies beeinträchtigt zwar nicht die Bewegung im Parallel-Abschnitt, aber die Bewegung im Einschwenkabschnitt kann je nach Neigung auf Grund des Eigengewichtes der Tür beschleunigt oder verlangsamt werden. Es wird als "positive Neigung" die Neigung in dem Fall bezeichnet, wenn die Einschwenk-Geschwindigkeit durch die Neigung erhöht wird. Dementsprechend wird als "negative Neigung" die Neigung in dem Fall bezeichnet, wenn die Einschwenk-Geschwindigkeit durch die Neigung gesenkt wird.

Eine Neigung in Querrichtung kann allerdings sehr plötzlich auftreten. Im Falle eines Schienenfahrzeugs können beispielsweise die Neigungswinkel von Bahnhofsstation zu Bahnhofsstation Unterschiede aufweisen. Die Neigungswinkel in Bahnhofsstationen können Werte bis zu +/- 8° annehmen. Sogar innerhalb einer Bahnhofsstation kann entlang des Schienenfahrzeugs eine unterschiedliche Neigung auftreten.

Diese plötzliche Änderung der Neigungswinkel wirkt sich nachteilig auf das Lernverfahren aus, da das Verfahren die besten Ergebnisse liefert, wenn sich die Umgebungsbedingungen nur langsam ändern.

So kann beispielsweise bei einem positiven Neigungswinkel, bei dem der Motorstrom durch die geneigte Stellung bereits gesenkt ist, ein Hindernis, welches zu einem erhöhten Motorstrom führt, unter Umständen nicht sicher erkannt werden, weil der resultierende Motorstrom unterhalb der Schwelle liegt, für die das Lernverfahren ein Hindernis oder eine Einklemmung detektieren würde.

Aufgabe der Erfindung ist es, eine in Querrichtung geneigte Stellung des Fahrzeugs zu ermitteln, um Einklemmungen besser und sicherer detektieren zu können.

Die Lösung der Aufgabe erfolgt erfindungsgemäß mit den Merkmalen aus dem kennzeichnenden Teil des Patentanspruchs 1. Vorteilhafte Weiterbildungen sind in den abhängigen Ansprüchen beschrieben.

Es wird zur Lösung der Aufgabe der Effekt ausgenutzt, dass bei einer geneigten Stellung des Fahrzeugs der Neigungswinkel auf eine Parallel-Bewegungsgröße (z.B. Geschwindigkeit oder Zeitintervall zwischen zwei vorgegebenen Punkten im Parallel-Abschnitt) nur einen vernachlässigbaren Einfluss ausübt, wohingegen der Einfluss auf eine Einschwenk-Bewegungsgröße (z.B. Geschwindigkeit oder Zeitintervall zwischen zwei vorgegebenen Punkten im Einschwenk-Abschnitt) groß ist. Die Parallel-Bewegungsgröße wird somit nur maßgeblich von inneren, konstanten Einflüssen, wie dem verwendeten Motor, Getriebe, Gewicht der Tür, usw., und von äußeren, nur langsam veränderbaren Einflüssen, wie Temperatur und Verschmutzung, bestimmt. Dieselben Einflüsse wirken auch auf die Einschwenk-Bewegungsgröße, allerdings mit dem Unterschied, dass hierauf auch die Neigung in Querrichtung einen wesentlichen Einfluss hat.

Bei einer Längsneigung des Fahrzeugs wird dahingegen im Wesentlichen die Parallel-Bewegungsgröße beeinflusst. Dieser störende Effekt kann ausgeschlossen werden, wenn zweiflügelige Schwenkschiebetüren mit mechanisch gekoppeltem Antrieb verwendet werden, weil sich in diesem Fall der Einfluss der Längsneigung auf die Bewegung der beiden Türflügel ausgleicht.

Kern der Erfindung ist, zum Einen die Parallel-Bewegungsgröße, zum Anderen die Einschwenk-Bewegungsgröße beispielsweise mittels Geschwindigkeitsgebern oder Zeitmessungen zu messen und diese beiden Bewegungsgrößen ins Verhältnis zu setzen. Da die beiden Bewegungsgrößen bis auf den Einfluss der Querneigung von den selben Bedingungen beeinflusst werden, liefert das Verhältnis eine Aussage über den Neigungswinkel.

Es wird vorteilhafterweise ein als Neigungskoeffizient bezeichnetes Verhältnis von Parallel-Bewegungsgröße zu Einschwenk-Bewegungsgröße gebildet, wobei der Quotient mit einem Faktor, insbesondere dem Faktor 100, multipliziert werden kann, damit der Mikrocontroller in einfacher Weise mit geeigneten Werten arbeiten kann.

Dieser Neigungskoeffizient wird mit einem gespeichertem Vergleichswert verglichen. Bei einer zu großen Abweichung ist eine Querneigung des Fahrzeugs erkannt.

Wenn eine geneigte Stellung detektiert worden ist, werden vorteilhafterweise nicht die durch das Lernverfahren vorgegebenen Stromschwellen verwendet, sondern es werden vorgegebene Werte verwendet. In einer besonders vorteilhaften Ausgestaltung können die Werte für die Stromschwellen erst aus einer Tabelle herausgesucht werden und dann in Abhängigkeit der Neigung verändert werden, wobei die Werte umso mehr verändert, insbesondere reduziert, werden, je größer die erkannte Neigung ist.

In besonders vorteilhafter Weise wird darüber hinaus das Lernverfahren bezüglich einer Anpassung der Motorstromschwelle für den Fall, dass eine Neigung erkannt wurde, ausgesetzt. Damit wird Rechnung getragen, dass der Zustand der Querneigung des Fahrzeugs einen Sonderfall darstellt.

In einer vorteilhaften Ausgestaltung können nur im Falle einer positiven Querneigung die oben beschriebenen Wirkungen, insbesondere die Anpassung der Motorstromschwelle während des Schließvorgangs, initiiert werden. Dies ist u.a. deshalb vorteilhaft, weil somit sichergestellt wird, dass bei einer durch beispielsweise einen Windstoß verursachten nur scheinbar vorliegenden negativen Querneigung die Schwellen nicht fälschlicherweise auf Kosten der Sicherheit heraufgesetzt werden.

Der gespeicherte Vergleichswert wird in einer besonders vorteilhaften Ausgestaltung selbst durch ein Lernverfahren variiert. Bei erstmaliger Inbetriebnahme der Steuerung kann durch einen mehrfachen Durchlauf des Schließvorgangs bei ebenem Untergrund ein Initialwert gefunden werden.

Im Betrieb des Fahrzeuges kann der Vergleichswert mittels des bei jedem Schließvorgang ermittelten Neigungskoeffizienten angepasst werden, wobei, um sicher zu stellen, dass die Anpassung des Vergleichswertes nicht auf Grund einzelner, abweichender Werte des Neigungskoeffizienten erfolgt, eine Anpassung des Wertes nur begrenzt erfolgen soll.

Ein mögliches Ausführungsbeispiel der Erfindung ist in den Figuren 1 bis 4 dargestellt.

### Es zeigen:

- Fig. 1: ein Fahrzeug mit Querneigung in einer schematischen Schnittansicht;
- Fig. 2: eine schematische Ansicht des Schließweges der Schwenkschiebetüren in der Draufsicht;
- Fig. 3: ein Diagramm, welches während des Schließvorganges die Türgeschwindigkeit über dem Schließweg bei unterschiedlichen Neigungswinkeln darstellt;
- Fig. 4a und b: ein Ablaufdiagramm der Neigungserkennung.

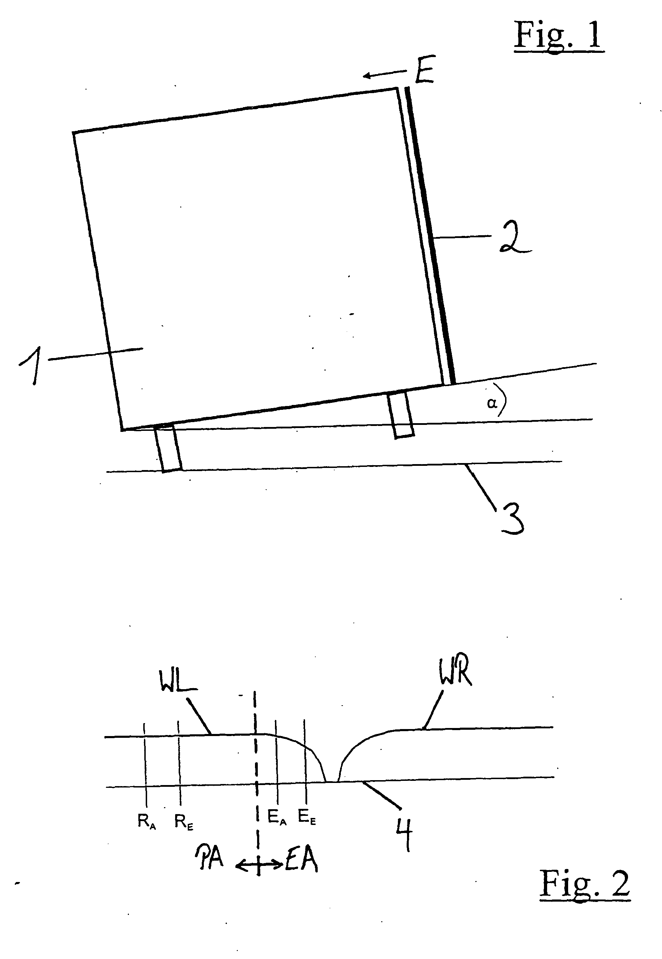

Die Fig. 1 zeigt ein Fahrzeug 1, welches sich in einer quergeneigten Stellung befindet, in einer schematischen Schnittansicht. Das Fahrzeug ist gegenüber der Bodenebene 3 um den Winkel α positiv geneigt. Das Fahrzeug 1 weist eine geöffnete zweiflügelige Schwenkschiebetüre 2 mit mechanisch gekoppeltem Antrieb auf, welche in die Einschwenkrichtung E einschwenkbar ist.

Die Fig. 2 zeigt eine schematische Ansicht des Schließweges der Schwenkschiebetüren in der Draufsicht. Dargestellt ist der Schließweg WL des linken Türflügels und der Schließweg WR des rechten Türflügels bezüglich zur Fahrzeugaußenwand 4. Ferner ist die Unterteilung des Schließweges in Parallel-Abschnitt PA und Einschwenk-Abschnitt EA dargestellt. Die Markierungen R_{A}, R_{E}, E_{A} und E_{E} stellen vorgegebene Punkte dar, zwischen denen, wie im folgenden Absatz beschrieben, eine Zeitmessung erfolgt.

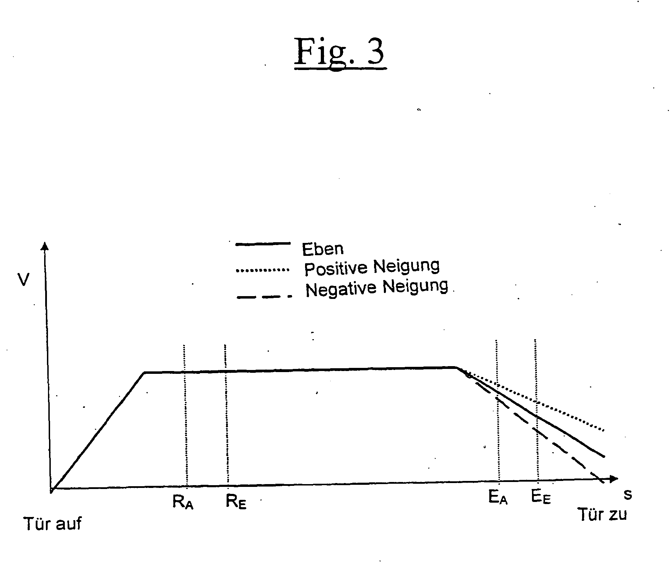

Die Fig. 3 zeigt ein Diagramm, welches die Geschwindigkeit v einer Schwenkschiebetüre über dem Schließweg aus Fig. 2 bei unterschiedlichen Neigungswinkeln darstellt. Der Schließvorgang wird hierbei von einem Mikrocontroller gesteuert. Die Türgeschwindigkeit steigt im Parallel-Abschnitt zu Beginn der Schließbewegung bis zu einem konstanten Wert an. Als Bewegungsgröße wird das Zeitintervall zwischen zwei vorgegebenen Punkten verwendet. Im konstanten Bereich des Parallel-Abschnitts erfolgt eine Zeitintervallmessung an vorgegebenen Referenzpunkten R_{A} und R_{E}, aus denen sich die Parallel-Bewegungsgröße ergibt. Zum Ende des Schließvorganges, d.h. im Einschwenk-Abschnitt, sinkt die Geschwindigkeit der Schwenkschiebetüre. Auch in diesem Bereich findet eine Zeitintervallmessungen an den vorgegebenen Einschwenkpunkten E_{A} und E_{E} statt, aus denen sich die Einschwenk-Bewegungsgröße ergibt. Die Zeitmessungen erfolgen interruptgesteuert mittels Inkremetalgebem, beispielsweise unter Verwendung von Hallsensoren.

Falls eine Querneigung des Fahrzeugs vorliegt, verändert sich der Geschwindigkeitsverlauf im Einschwenk-Abschnitt, wohingegen sich Geschwindigkeitsverlauf im Parallel-Abschnitt nicht ändert. Liegt eine positive Querneigung vor, so ist die Einschwenk-Geschwindigkeit größer als im Zustand ohne Neigung. Liegt eine negative Querneigung vor, so ist die Einschwenk-Geschwindigkeit kleiner als im Zustand ohne Neigung.

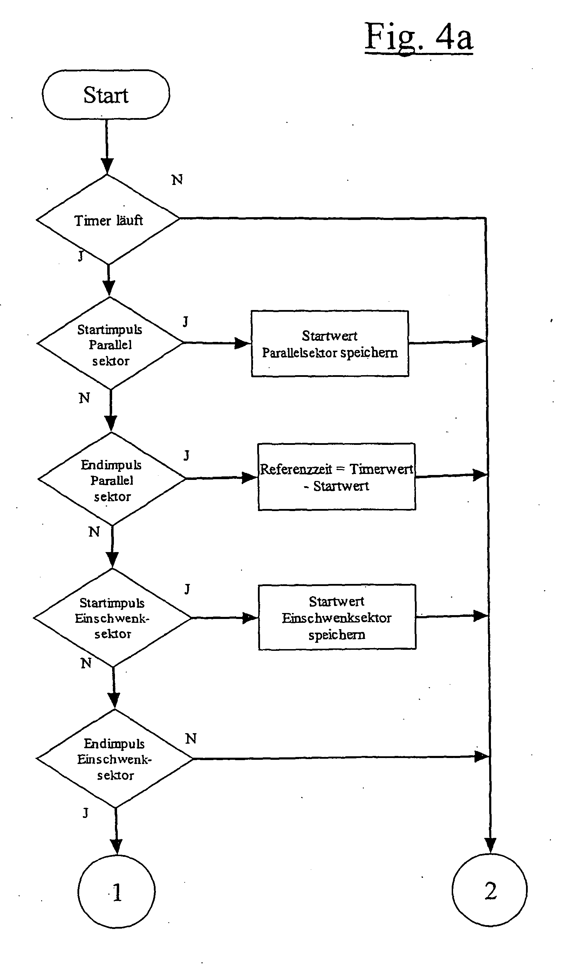

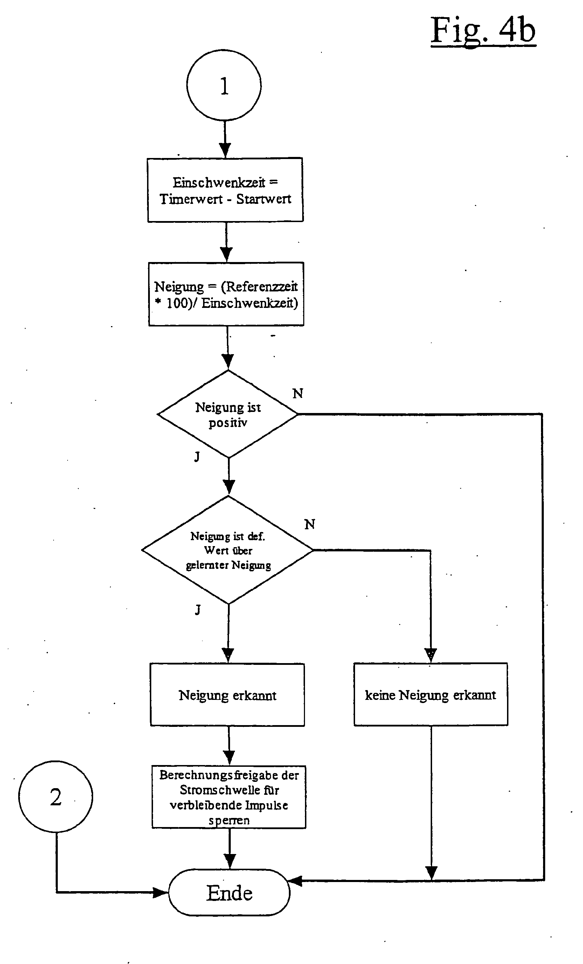

Die Fig. 4 a und b zeigen ein Ablaufdiagramm für die Neigungserkennung. Dieses Ablaufdiagramm wird solange ständig wiederholt, bis die Türe geschlossen ist. Nach dem Start aus der vollständig geöffneten Türstellung wird ein kontinuierlich laufender Timer gestartet. Sobald die Schwenkschiebetüre im Parallel-Abschnitt (Parallelsektor) den vorgegebenen ersten Punkt R_{A} erreicht, wird der aktuelle Timerwert als Startwert des Parallel-Abschnitts gespeichert. Erreicht die Türe den vorgegebenen zweiten Punkt R_{E}, wird der aktuelle Timerwert als Endwert des Parallel-Abschnitts gespeichert. Aus den gespeicherten Werten wird die als Referenzzeit bezeichnete Parallel-Bewegungsgröße ermittelt.

Sobald die Schwenkschiebetüre im Einschwenk-Abschnitt (Einschwenksektor) den vorgegebenen ersten Punkt E_{A} erreicht, wird der aktuelle Timerwert als Startwert des Einschwenk-Abschnitts gespeichert. Erreicht die Türe den vorgegebenen zweiten Punkt E_{E}, wird der aktuelle Timerwert als Endwert des Einschwenk-Abschnitts gespeichert. Aus den gespeicherten Werten wird die als Einschwenkzeit bezeichnete Einschwenk-Bewegungsgröße ermittelt.

Aus der ermittelten Parallel-Bewegungsgröße und der ermittelten Einschwenk-Bewegungsgröße wird der Neigungskoeffizient ermittelt. Der Neigungskoeffizient bestimmt sich hierbei aus dem Verhältnis von Referenzzeit zu Einschwenkzeit, d.h. aus dem Verhältnis von Parallel-Bewegungsgröße zu Einschwenk-Bewegungsgröße, wobei der Quotient mit dem Faktor 100 multipliziert wird, damit der Mikrocontroller in einfacher Weise mit geeigneten Werten arbeiten kann.

Geht aus dem Verhältnis hervor, dass möglicherweise eine positive Querneigung vorliegt, so wird der Neigungskoeffizient mit einem gespeicherten Vergleichswert verglichen. Weicht der Neigungskoeffizient von dem gespeicherten Wert ab, so ist eine Querneigung des Fahrzeugs erkannt. Dies hat zum Einen zur Folge, dass nicht die durch ein nicht näher beschriebenes Lernverfahren vorgegebenen Stromschwellen für die Einklemmerkennung verwendet werden, sondern es werden aus einer vorgegebenen Tabelle ablesbare Werte, welche in Abhängigkeit von der erkannten Neigung reduziert werden, für die Stromschwellen verwendet. Zum Anderen hat die Erkennung der Querneigung zur Folge, dass das Lernverfahren für die Einklemmerkennung ausgesetzt wird.

Der gespeicherte Vergleichswert wird selbst durch ein Lernverfahren variiert. Um sicher zu stellen, dass die Anpassung des Vergleichswertes nicht auf Grund einzelner, abweichender Werte des Neigungskoeffizienten erfolgt, wird der Vergleichswert nur dann angepasst, wenn die Differenz aus Maximalwert und Minimalwert der letzten fünf Werte geringer ist als eine vorgegebene maximale Abweichung vom Mittelwert der letzten fünf Werte. Wenn diese geringe Abweichung der letzten fünf Werte gegeben ist, fließt der mittlere Wert der letzten fünf Neigungskoeffizienten mit einem Drittel gewichtet in die Neuberechnung ein. Mit einer Gewichtung von zwei Drittel geht der vormalige Vergleichswert in die Berechnung ein.

## Patentansprüche

1. Verfahren zur Ermittlung einer in Querrichtung geneigten Stellung eines Fahrzeugs während des Schließvorganges der Fahrzeugtüren, wobei die Fahrzeugtüren als zweiflügelige Schwenkschiebetüren mit mechanisch gekoppeltem Antrieb ausgeführt sind, deren Schließbewegung im Wesentlichen in zwei Abschnitte, nämlich einen ersten Parallel-Abschnitt, in welchem die Schwenkschiebetüren eine Bewegung im Wesentlichen parallel zum Fahrzeug durchführen, und einen zweiten Einschwenk-Abschnitt, in welchem die Schwenkschiebetüren, zusätzlich zu der parallelen Bewegung, in Richtung zum Fahrzeug einschwenken, unterteilbar ist, wobei während des Schließvorgangs der Schwenkschiebetüren eine Bewegungsgröße, wie eine Geschwindigkeit oder ein Zeitintervall zwischen zwei vorgegebenen Punkten, von zumindest einer Schwenkschiebetüre ermittelt wird,
**dadurch gekennzeichnet,**
• **dass** in beiden Abschnitten eine Bewegungsgröße der Schwenkschiebetüre ermittelt wird, nämlich im Parallel-Abschnitt die Parallel-Bewegungsgröße und im Einschwenk-Abschnitt die Einschwenk-Bewegungsgröße,
• **dass** aus der Parallel-Bewegungsgröße und der Einschwenk-Bewegungsgröße ein Bewegungsgrößen-Verhältnis gebildet wird, und
• **dass** dieses Bewegungsgrößen-Verhältnis mit einem Vergleichswert verglichen wird.

2. Verfahren nach Anspruch 1, **dadurch gekennzeichnet, dass** eine maximale Abweichung des Bewegungsgrößen-Verhältnis von dem Vergleichswert vorgegebenen wird, und dass bei Überschreiten der Abweichung eine Neigung als erkannt gilt.

3. Verfahren nach Anspruch 1 oder 2, **dadurch gekennzeichnet, dass** an mehreren Schwenkschiebetüren des Fahrzeugs das Verfahren nach Anspruch 1 durchgeführt wird.

4. Verfahren nach einem oder mehreren der Ansprüche 1 bis 3, **dadurch gekennzeichnet, dass** der Vergleichswert durch ein Lernverfahren angepasst wird.

5. Verfahren nach Anspruch 4, **dadurch gekennzeichnet, dass** das Lemverfahren die ermittelten Bewegungsgrößen-Verhältnisse für die Bestimmung des angepassten Vergleichswertes verwendet.

6. Verfahren nach Anspruch 5, **dadurch gekennzeichnet, dass** eine Anzahl N, insbesondere N = 5, vorgegeben wird, und dass der Vergleichswert nur dann angepasst wird, wenn die Differenz aus Maximalwert und Minimalwert der letzten N Bewegungsgrößen-Verhältnisse geringer ist als eine vorgegebene maximale Abweichung vom Mittelwert der letzten N Vergleichswerte.

7. Verfahren nach Anspruch 6, **dadurch gekennzeichnet, dass**, wenn die Differenz geringer ist, der mittlere Wert der letzten N Neigungskoeffizienten mit etwa einem Drittel gewichtet in die Neuberechnung des Vergleichswertes einfließt, wobei der vormalige Vergleichswert mit einer Gewichtung von etwa zwei Drittel einfließt.

8. Verfahren nach einem oder mehreren der Ansprüche 1 bis 6, **dadurch gekennzeichnet, dass** zur Erkennung von Einklemmungen der Motorstrom des Schließmotors überwacht wird, dass eine Motorstromschwelle vorgegeben wird, bei deren Überschreitung eine Einklemmung detektiert wird, und dass diese Motorstromschwelle mittels eines Lemverfahrens nach einem Schließvorgang angepasst wird.

9. Verfahren nach Anspruch 8, **dadurch gekennzeichnet, dass** die Anpassung der Motorstromschwelle nach einem Schließvorgang bei einer erkannten Neigung ausgesetzt wird.

10. Verfahren nach Anspruch 8 oder 9, **dadurch gekennzeichnet, dass** die Motorstromschwelle während des Schließvorgangs angepasst wird, wenn eine Neigung erkannt wurde.

11. Verfahren nach Anspruch 10, **dadurch gekennzeichnet, dass** die Motorstromschwelle während des Schließvorgangs nur angepasst wird, wenn eine positive Neigung erkannt wurde.

## Claims

1. A method of acquiring a position of a vehicle in which said vehicle is inclined in the transverse direction during the closing operation of the vehicle doors, said vehicle doors being configured to be two-wing pivot sliding doors with a mechanically coupled drive the closing movement of which may be divided substantially in two sections, namely a first parallel section in which the pivot sliding doors make a movement substantially parallel to the vehicle and a second inward pivot motion section in which the pivot sliding doors pivot inward toward the vehicle in addition to the parallel movement, a motion variable such as a speed or a time interval between two given points being acquired by at least one pivot sliding door during the closing operation of the pivot sliding doors,
**characterized in**
• **that** a motion variable of the pivot sliding door is acquired in both sections, namely the parallel motion variable in the parallel section and the inward pivot motion variable in the inward pivot motion section,
• **that** a motion variable ratio is formed from the parallel motion variable and the inward pivot motion variable, and
• **that** this motion variable ratio is compared with a reference value.

2. The method as set forth in claim 1, **characterized in that** a maximum error between the motion variable ratio and the reference value is given and that an incline is deemed detected when the error is exceeded.

3. The method as set forth in claim 1 or 2, **characterized in that** the method as set forth in claim 1 is performed on several pivot sliding doors of the vehicle.

4. The method as set forth in one or several of the claims 1 through 3, **characterized in that** the reference value is adapted using a learning method.

5. The method as set forth in claim 4, **characterized in that** the learning method uses the acquired motion variable ratios for determining the adapted reference value.

6. The method as set forth in claim 5, **characterized in that** a number N, in particular N = 5, is given and that the reference value is only adapted if the difference between maximum value and minimum value of the last N motion variable ratios is lower than a given maximum error from the average value of the last N reference values.

7. The method as set forth in claim 6, **characterized in that**, if the difference is less, the average value of the last N incline coefficients, weighted with approximately one third, enters into the new calculation of the reference value, the former reference value being integrated therein with a weighting of approximately two thirds.

8. The method as set forth in one or several of the claims 1 through 6, **characterized in that** the motor current of the closing motor is monitored in order to recognize jamming, that a motor current threshold is given which, when exceeded, is indicative of jamming, and that this motor current threshold is adapted after a closing operation by means of a learning method.

9. The method as set forth in claim 8, **characterized in that,** upon detection of an incline, the motor current threshold is no longer adapted after a closing operation.

10. The method as set forth in claim 8 or 9, **characterized in that**, upon detection of an incline, the motor current threshold is adapted during the closing operation.

11. The method as set forth in claim 10, **characterized in that** the motor current threshold is only adapted during the closing operation when a positive incline has been detected.

## Revendications

1. Procédé pour déterminer une position inclinée suivant la direction transversale d'un véhicule pendant la fermeture des portes du véhicule, les portes du véhicule étant réalisées sous forme de porte coulissante pivotante à deux battants avec un entraînement couplé mécaniquement dont le mouvement de fermeture peut être divisé sensiblement en deux parties, à savoir une première partie parallèle dans laquelle les portes coulissantes pivotantes font un mouvement sensiblement parallèle au véhicule et une deuxième partie de pivotement vers l'intérieur dans laquelle les portes coulissantes pivotantes pivotent vers l'intérieur en direction du véhicule, en plus du mouvement parallèle, une grandeur cinétique telle qu'une vitesse ou un intervalle de temps entre deux points donnés étant calculée pendant l'opération de fermeture des portes coulissantes pivotantes,
**caractérisé en ce**
• **qu**'une grandeur cinétique de la porte coulissante pivotante est calculée dans les deux parties, à savoir la grandeur cinétique de mouvement parallèle dans la partie parallèle et la grandeur cinétique de pivotement vers l'intérieur dans la partie de pivotement vers l'intérieur,
• qu'un rapport de grandeurs cinétiques est formé à partir de la grandeur cinétique du mouvement parallèle et de la grandeur cinétique de pivotement vers l'intérieur et
• que ce rapport de grandeurs cinétiques est comparé à une valeur de comparaison.

2. Procédé selon la revendication 1, **caractérisé en ce qu'**un écart maximum entre le rapport entre les grandeurs cinétiques et la valeur de comparaison est imposé et qu'une inclinaison est considérée détectée lorsque cet écart est dépassé.

3. Procédé selon la revendication 1 ou 2, **caractérisé en ce que** le procédé selon la revendication 1 est exécuté sur plusieurs portes coulissantes pivotantes du véhicule.

4. Procédé selon une ou plusieurs des revendications 1 à 3, **caractérisé en ce que** la valeur de comparaison est adaptée par un procédé d'apprentissage.

5. Procédé selon la revendication 4, **caractérisé en ce que** le procédé d'apprentissage utilise les rapports entre les grandeurs cinétiques obtenus pour déterminer la valeur de comparaison adaptée.

6. Procédé selon la revendication 5, **caractérisé en ce qu'**un nombre N, notamment N = 5, est imposé et que la valeur de comparaison n'est adaptée que si la différence entre la valeur maximale et la valeur minimale des derniers N rapports entre les grandeurs cinétiques est inférieure à un écart maximum imposé par rapport à la valeur moyenne des dernières N valeurs de comparaison.

7. Procédé selon la revendication 6, **caractérisé en ce que**, si la différence est inférieure, la valeur moyenne des derniers N coefficients d'inclinaison entre dans le nouveau calcul de la valeur de comparaison, affectée d'une pondération d'environ un tiers, la valeur de comparaison antérieure entrant dans le calcul avec une pondération d'environ deux tiers.

8. Procédé selon une ou plusieurs des revendications 1 à 6, **caractérisé en ce que** le courant du moteur de fermeture est surveillé pour reconnaître des coincements, qu'un seuil du courant du moteur est imposé et qu'en cas de dépassement de celui-ci un coincement est détecté, et que ce seuil du courant du moteur est adapté après une opération de fermeture au moyen d'un procédé d'apprentissage.

9. Procédé selon la revendication 8, **caractérisé en ce que** l'on arrête d'adapter le seuil du courant du moteur après une opération de fermeture lorsqu'une inclinaison a été constatée.

10. Procédé selon la revendication 8 ou 9, **caractérisé en ce que** l'on adapte le seuil du courant du moteur pendant l'opération de fermeture lorsqu'une inclinaison a été constatée.

11. Procédé selon la revendication 10, **caractérisé en ce que** l'on n'adapte le seuil du courant du moteur pendant l'opération de fermeture que si une inclinaison positive a été constatée.
